# EUROPEAN PATENT APPLICATION

(11) **EP 1 962 399 A1**
(43) Date of publication of application: **27.08.2008**
(21) Application number: 07250773.4
(22) Date of filing: 23.02.2007
(51) Int. Cl.: H02G 3/18

(54) **Distribution box for raised floors**

(71) Applicant: C & C Marshall Limited, Sidney Little Road Churchfields Industrial Estate St Leonards-on-Sea, East Sussex TN38 9PU (GB)
(72) Inventor: Austin, Brian Richard, Westfield TN35 4QZ, East Sussex (GB)
(74) Representative: Lamb, Martin John Carstairs

(57) **Abstract**

A kit according to the present invention comprises a frame (1) comprising a top part (3) for engaging a floor structure, wall parts (4) extending away from the top part and defining an internal space and a base part defining an opening (5). A plurality of service distribution structures (2) are provided, each comprising at least one power, communications or data outlet (7) engageable with a first plug-in connector and at least one corresponding power, communications or data inlet (16) engageable with a second plug-in connector, connection means (6, 8) being provided for fixing a selected one of the service distribution structures (2) in the opening (5) of the frame (1) with the outlet (7) facing into the space defined by the frame and so that the power, communications or data inlet faces into the space beneath the raised floor.

## Description

The present invention relates to a kit for assembling a distribution box for location at floor level in a raised floor structure.

The present invention further relates to a method for assembly of a distribution box for location at floor level in a raised floor structure.

A known type of outlet box for a raised floor structure is disclosed in GB 2 194 975.

Raised floor systems are very commonly used in modem building systems. They comprise a plurality of support structures, for example pillars, which support a false floor structure of a room or other part of a building, above the architectural floor level of the building. The raised floor thereby defines a space beneath the floor of the room. This space is very widely used for distribution or services, for example power, data and communication services. In order to provide an interface between services within the room and the distribution system below the raised floor, outlet boxes are required which must be safe and strong in normal use, to prevent accidental contact with live power transmission cables below the floor, but which also allow services in the room to be connected and disconnected relatively easily.

Such distribution boxes typically comprise a frame, the top part of which is for engaging the floor structure. The top part of the box is defined by wall parts which extend away from the top part of the frame. The walls define an internal space in which plugs and other connectors for services within the room can be accommodated. As shown in GB 2 194 975, the base of the box provides a housing or mounting for one or more sockets or similar devices, for connection to plugs from the room.

There is preferably a lid, for example a hinged lid for closing the frame. Access holes may be provided through which cables extend from the plugs connected to the sockets, to equipment in the room.

During assembly, a skilled technician has to assemble the distribution box by connecting the component parts and by making connections between wires of distribution system and the sockets, for example by fixing the wires of the distribution system to contacts of the sockets by screwing in place.

The assembly process is found to be time consuming and to require skilled labour.

In order to allow installation to be carried out by unskilled technicians, it is desired to form connections between sockets in a distribution box and the distribution system which is located in the space beneath the raised floor, by using plug-in connectors. It is also desired to supply the distribution box ready assembled so it only has to be put into the desired position and the plug-in connections made. However, distribution boxes are required in practice in a very large number of configurations, depending upon the number of outlets required for power, communications, data etc. This results in a large burden on the manufacturer of such distribution boxes to carry a large inventory of boxes of different configuration.

The present inventor has realised that a distribution box for use in connection with a raised floor structure can be effectively divided into a part which is common to a wide variety of different outlet configurations and a part which is specific to each configuration. Then, if the parts which are specific to the different configurations are made so that they have at least one common dimension, they can all be fitted into a standard design of frame. In this way, the number of different units which have to be retained in stock to provide made-up distribution boxes is reduced, as a substantial part of each box can be made standard for all designs.

Accordingly, the present invention provides a kit for assembling a distribution box for location at floor level in a raised floor structure, the kit comprising:
a frame, comprising a top part for engaging the floor structure, wall parts extending away from the top part and defining an internal space, a base part, the base part defining an opening,
a plurality of service distribution structures, each service distribution structure comprising at least one power, communications or data outlet, engageable with a plug-in connector, and at least one corresponding power, communications or data inlet, engageable with a plug-in connector, connection means being provided for fixing a selected one of the service distribution structures in the opening of the frame, with the outlet facing into the space defined by the frame and so that the power, communications or data inlet faces, in use, into the space beneath the raised floor.

The present invention further provides a method of assembling a system for distributing power, communications or data services in the space beneath a raised floor, comprising providing a kit according to the invention, selecting a frame and one of the service distribution structures, engaging the service distribution structure with the frame to form a distribution box and mounting the distribution box in a raised floor structure with the frame at floor level, and plugging connectors of a service distribution system mounted in the space beneath the floor into respective inlets of the distribution box.

Preferred and optional aspects of the invention will be described further below.

A kit according to the present invention may be held by a manufacturer of systems for distribution of power, communications or data or held by an installer of such systems.

The present invention may be used in any conventional raised floor system and it is suitably compatible with existing systems for the distribution of power, communications or data, as will be known to the person skilled in the art.

The frame of the present invention may engage the floor structure by any suitable means, preferably, the frame comprises floor-engaging means which may be of conventional type.

Preferably, the frame comprises an outer rim and a lid mountable within the outer rim, the lid being removable or operable to permit access to the outlet located within the frame. For example, the lid may be hinged. Preferably, at least one access hole is provided through which cables may pass from the outlet to consumers located above the floor level. These may be of conventional design. The lid is suitably formed of any suitable material. Preferably, it is of steel, which is strong enough to carry the weight of people walking on the floor. Preferably, the lid comprises a recess in which flooring material may be laid to match the adjacent floor surface, for example a carpet section.

The wall parts of the frame may have any suitable configuration. Preferably, they define a substantially quadrilateral structure, for example being square or rectangular in plan.

Preferably, the wall parts extend for a sufficient distance away from a cover to permit conventional plugs and other conventional apparatus to be received in the space between the lid and the outlets.

The base part may be defined by a lower edge of the wall parts or by surfaces extending inwardly from the wall parts, for example a base surface. The base part will define, at least in part, an opening. The opening may be of any suitable size for accommodating service distribution structures. In a preferred embodiment, the opening extends across substantially the whole of the internal space, at its bottom extremity. In this way, relatively large service distribution structures can be accommodated.

The kit of the present invention requires a plurality of service distribution structures which are of at least two different designs, and preferably of more than two different designs. The different designs of service distribution structure may be distinguished from one another by, for example, the number of power, communications or data outlets or the combination of different types of power, communication or data outlet or both.

For example, one type of service distribution structure may provide two conventional power sockets, a clean power socket and a data socket, while a second type of service distribution structure may provide two telephone sockets and a single power socket.

Connection means are provided in the opening of the frame. The connection means may comprise any suitable device. For example, the connection means may comprise mechanical fixings or adhesive fixings. Preferably, mechanical fixings are used. Preferably, the opening comprises at least one surface which, in use, abuts a corresponding surface of the service distribution structure.

For example, at least one of the opening or the service distribution structure may comprise a flange and the other comprises a body which, in the assembled position, interacts with the flange. Preferably, each of the opening and the service distribution structure comprises a respective flange, which flanges, in use, abut one another. Additional fixing means, for example screws, nuts and bolts or any other suitable device may be provided.

The service distribution structure may occupy at least part of the opening, but it is preferred that the service distribution structure occupies substantially the whole of the opening, so that the space defined by the frame is effectively closed by a face of the service distribution structure. Preferably, an upper surface of the service distribution structure defines that a lower face of the internal space of an assembled distribution box.

The service distribution structure will comprise outlets which are engageable with a plug-in connector. That is, engagement between the connector and the outlet is preferably by means of a simple movement which does not require complicated assembly steps. For example, a conventional plug and socket arrangement or a conventional male-female connection may be provided.

Similarly, the power, communications or data inlet or inlets of the service distribution structure are designed to be engageable in a plug-in manner with a connector. The connector may be of any suitable design. The connector preferably forms part of a service distribution system which is located in the space beneath the floor.

The connection means of the opening and the service distribution structure may be designed, so that, in use, a plug-in connector can be engaged with the inlet of the service distribution structure through the opening of the frame. It is particularly preferred that at least part of the service distribution structure projects through the opening, out of the frame. In this way, the space inside the frame is kept relatively free. Engagement of connectors with the inlets of the service distribution structure is relatively simple, as access is easy and not obstructed by the frame.

In a particularly preferred embodiment, each service distribution structure comprises a face which, in the assembled distribution box, defines a lower face of the internal space of the distribution box, connection means being formed adjacent the upper face, for engaging connection means of the opening. In this way, substantially the whole of the service distribution structure is located outside the frame. This allows the frame to be made relatively small and allows good access to the inlets of the surface distribution structure from the space beneath the raised floor.

The service distribution structures may themselves be formed out of a plurality of modular components which are selected and placed inside a sub-frame.

The service distribution structures of the present invention preferably have the same connection means, in the sense that they all have connection means which are connectable to the same connection means of the frame. In this way, a single frame can be connected to a plurality of different types of service distribution structure.
Preferably, the service distribution structures are the same size as one another in at least one dimension. Preferably, the part which fits within the opening of the frame is of the same size in each design of service distribution structure.

The frame may be mounted at the floor level in the sense that, when complete, a part of the frame or another structure engaged with the top part of the frame will be generally coplanar with the adjacent floor. For example, the top part of the frame may mount a section of flooring material which, in a completed system, is substantially coplanar with the adjacent flooring.

In a first manufacturing step, at least one frame according to the present invention is manufactured, and a set of service distribution structures according to the present invention is manufactured, to provide a kit according to the invention.

In a second manufacturing step, which may occur after a period of time after the first manufacturing step is complete, the kit of the invention is used to assemble a distribution box in accordance with the stated requirement of an installer. That is, at least one frame and a selected service distribution structure are taken and connected together by means of the connection means. There may be subsequent, optional, manufacturing steps, for example mounting of the lid, placing of flooring material in a space in the lid, attaching labels etc.

In a final, assembly step, the assembled distribution box is located at floor level in a raised floor structure, and connectors from the service distribution system which is located below the floor structure are plugged into respective inlets of the distribution box.

The present invention will be described further by way of example only with reference to the accompanying drawings, in which:
Figure 1 is a sketch isometric view showing components of the kit of the present invention, before assembly.
Figure 2 is a sketch isometric view of the components of the kit, partially assembled.

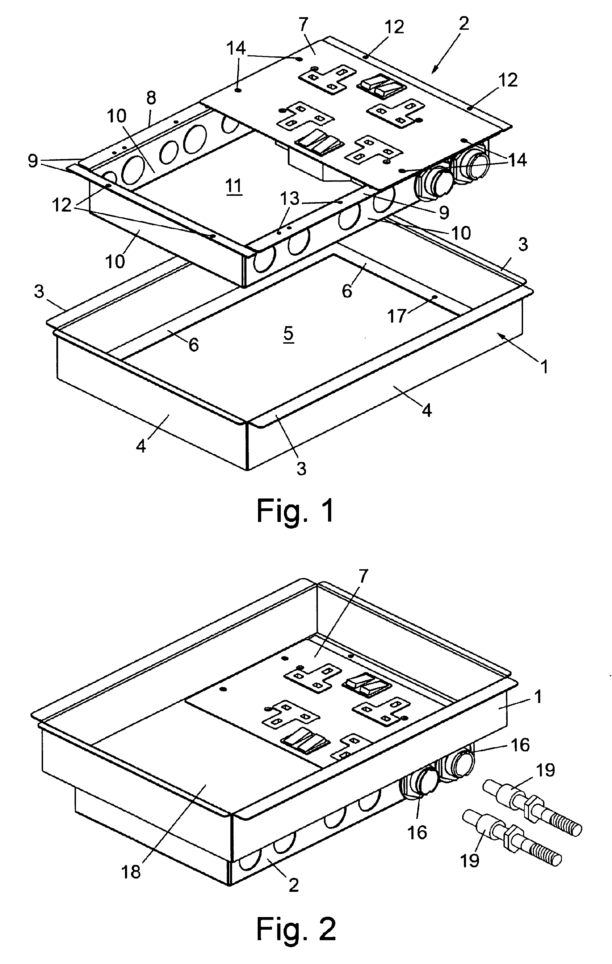

Figure 1 shows two components of a kit according to the present invention, for assembly into a distribution box for location at floor level in a raised floor structure, before assembly.

The kit comprises a frame 1 and a plurality of service distribution structures, of which one example, 2, is shown. According to the present invention, the kit comprises a plurality of different types of service distribution structure, from which the example 2 has been selected for the assembly of a particular distribution box.

The frame 1 comprises a top part defined by flanges 3 which extend outwardly. The flanges 3 are to allow the frame to be mounted in a raised floor structure at floor level. The flanges 3 may have further upstanding parts to hold a lid assembly (not shown) which is otherwise of standard form.

There are wall parts 4 extending away from the top part and defining between them an internal space. The wall parts 4 define, at their lower end, a base part. The base part is defined by inwardly directed flanges 5 which extend around the whole of the periphery of an opening 5. The opening 5 corresponds in plan to the plan shape of the frame 1 and is slightly small than in size. In practice, the flanges 6 may extend inwardly for a distance in the range 1-10 mm.

The flanges 3, wall parts 4 and flanges 6 are preferably formed of material such as galvanised steel. They are preferably assembled by bending and joining sheets of sheet steel material.

The service distribution structure 2 is shown partially complete. Part of the top surface is defined by a socket plate 7, which is of conventional design. It provides four conventional three-pin power outlets. The socket plate 7 is retained by a frame member 8 which has an open top. The socket plate 7 closes part of the open top. In practice, in a complete service distribution structure, the remainder of the top part would be closed by another structure, such as a blanking plate or a telephone socket outlet, according to the design of service distribution structure concerned. The frame member 8 is formed by bending and connecting galvanised sheet material in a similar manner to the frame 1. It comprises flange parts 9 extending around a top periphery, wall parts 10 extending away from the flange parts 9 and a base sheet 11, which closes the lower end of the frame member 8. The frame member 8 is provided with screw holes 12 for receiving screws (not shown). In the embodiment shown, screw holes 13 align with screw holes 14 of the socket plate, screws (not shown) being passed through both screw holes 13 and 14 to fix the socket plate in position on the frame member 8. It can also be seen that the frame member 8 is provided with knock-out holes 15. A selected number of knock-out holes 15 may be knocked out to allow plug-in inlet connectors 16 to be mounted whereby the desired power connections can be provided, according to the services to be distributed by the selected type of service distribution structure.

During an assembly phase, the selected service distribution structure 2 is engaged with the frame 1.

The inwardly directed flange 6 of the frame 1 and the outwardly directed flanges 8 of the service distribution structure 2 are designed, so that, during assembly, they define connecting means whereby the two parts can be connected.

During assembly, the service distribution structure 2 is passed through the internal space of the frame, so that the lower part of the frame member passes through the opening 5 but so that the outwardly directed flanges 8 are retained on the inwardly directed flanges 6 of the frame. Screws are then passed through screw holes 12 to engage corresponding screw holes 17 of the frame 1 so that the service distribution structure 2 is fixed in place in the frame. In this way, with a very simple construction step, a distribution box may be assembled.

Optional parts, for example a lid member (not shown) can also be provided to complete the distribution box.

Figure 2 is a sketch isometric view of the assembled distribution box.

In Figure 2, the service distribution structure 2 is shown as it would be used, in a complete form, with its top surface closed, in this case by a blanking plate 18. The top surface (comprising blanking plate 18 and socket plate 7) defines a lower face of an internal space of the distribution box which can receive conventional plugs (not shown) whereby power can be distributed to consumers located above the floor level. It can be seen that the lower part of the service distribution structure 2 extends through the opening 5 so that it will, in use, extend into the space below the floor where it can be connected to plug-in connectors 19 by engaging plug-in inlets 16.

The present invention has been described above by way of example only and modifications can be made in the invention. The invention also extends to any individual features described or implicit herein or any combination of any such features or any generalisation of any such features or combination of such features.

## Claims

1. A kit for assembling a distribution box for location at floor level in a raised floor structure, the kit comprising:
a frame, comprising a top part for engaging the floor structure, wall parts extending away from the top part and defining an internal space, and a base part, the base part defining an opening, and
a plurality of service distribution structures, each service distribution structure comprising at least one power, communications or data outlet, engageable with a first plug-in connector, and at least one corresponding power, communications or data inlet, engageable with a second plug-in connector, connection means being provided for fixing a selected one of the service distribution structures in the opening of the frame, with the outlet facing into the space defined by the frame and so that the power, communications or data inlet faces into the space beneath the raised floor.

2. A kit according to Claim 1, wherein the frame further comprises a lid.

3. A kit according to Claim 1 or 2, wherein the service distribution structures are distinguished from one another by the number of power, communications or data outlets or by the combination of different types of power, communications or data outlets, or both.

4. A kit according to any preceding claim, wherein the opening comprises a surface which, in use, abuts a corresponding surface of the service distribution structure to provide the connection means.

5. A kit according to Claim 4, wherein at least one of the opening or the service distribution structure comprises a flange and the other comprises a body which, in the assembled position, interacts with the flange.

6. A kit according to any preceding claim, wherein the service distribution structure occupies substantially the whole of the opening.

7. A kit according to any preceding claim, wherein, in the assembled distribution box, at least part of the service distribution structure projects through the opening, out of the frame.

8. A method of assembling a system for distributing power, communications or data services in a space beneath a raised floor, comprising providing a kit according to any of Claims 1 to 7, selecting a frame and one of the service distribution structures, engaging the service distribution structures with the frame to form a distribution box, mounting the distribution box in a raised floor structure with the frame at floor level, and plugging connectors of the service distribution system mounted in the space beneath the floor into respective inlets of the distribution box.
